# EUROPÄISCHE PATENTSCHRIFT

(11) **EP 2 873 838 B1**
(45) Veröffentlichungstag und Bekanntmachung des Hinweises auf die Patenterteilung: **21.06.2017**
(21) Anmeldenummer: 14190227.0
(22) Anmeldetag: 24.10.2014
(51) Int. Cl.: F02C 3/30, F02C 7/06, F01D 25/18, B01D 46/00, B01D 47/06, B01D 51/04

(54) **Strahltriebwerk mit einer Einrichtung zum Einsprühen von Öl in einen Luft-Öl-Volumenstrom**
Jet engine with a device for spraying oil into an air-oil volume flow
Moteur à réaction doté d'un dispositif de pulvérisation d'huile dans un débit volumique air/huile

(30) Priorität: 19.11.2013 DE 102013112773
(43) Veröffentlichungstag der Anmeldung: 20.05.2015
(73) Patentinhaber: Rolls-Royce Deutschland Ltd & Co KG, 15827 Blankenfelde-Mahlow (DE)
(72) Erfinder: Beier, Jürgen, 15732 Schulzendorf (DE); Venter, Gideon, 14165 Berlin (DE)
(74) Vertreter: Kronthaler, Wolfgang N.K.

(56) Entgegenhaltungen:
- WO-A1-2013/168232
- US-A- 4 342 489
- US-A1- 2003 039 421
- US-A1- 2009 134 243

## Beschreibung

Die Erfindung betrifft ein Strahltriebwerk mit einer Einrichtung zum Einsprühen von Öl in einen in einem von einem Wandungsbereich begrenzten Strömungsquerschnitt geführten Luft-Öl-Volumenstrom gemäß der im Oberbegriff des Patentanspruches 1 näher definierten Art.

Aus der unveröffentlichten DE 10 2013 106 879.0 der Anmelderin ist ein Strahltriebwerk mit wenigstens einem Ölabscheider bekannt, durch den ein Luft-Öl-Volumenstrom aus wenigstens einem mit Öl beaufschlagten Bereich zum Abscheiden von Öl führbar ist. Das Strahltriebwerk ist mit einer Einrichtung zum Einsprühen von Öl in den Luft-Öl-Volumenstrom ausgebildet. Über die Einrichtung wird vorzugsweise ein definierter Ölsprühstrahl direkt in den Luft-Öl-Volumenstrom eingebracht. Beim Aufeinandertreffen von eingesprühten Öltröpfchen auf bereits im Luft-Öl-Volumenstrom vorhandene Öltröpfchen vereinigen sich die eingesprühten Öltropfen und die bereits vorhandenen Öltröpfchen aufgrund ihrer Anziehungskräfte zu gewünscht größeren Tropfen, die im weiteren Strömungsweg des Luft-Öl-Volumenstromes mit geringerem Aufwand als Ölpartikel mit kleinerem Durchmesser aus der Luft mechanisch abscheidbar sind. Die Einrichtung ist mit einer derart konfigurierten Öldüse ausgeführt, dass beim Einsprühen von Öl in den in Richtung des Ölabscheiders strömenden Luft-Öl-Volumenstrom Öltropfen entstehen, die größtenteils größer sind als Öltropfen, die aufgrund ihrer Größe in einem porösen Bereich des Ölabscheiders nicht ausfilterbar sind.

US 2009134243 zeigt ein Strahltriebwerk gemäß dem Stand der Technik. Der vorliegenden Erfindung liegt die Aufgabe zugrunde, ein Strahltriebwerk mit einer konstruktiv einfachen und mit geringem Aufwand in bestehende Triebwerkssysteme implementierbaren Einrichtung zum Einsprühen von Öl zur Verfügung zu stellen.

Erfindungsgemäß wird diese Aufgabe mit einem Strahltriebwerk mit den Merkmalen des Patentanspruches 1 gelöst.

Das erfindungsgemäße Strahltriebwerk ist mit einem einen Strömungsquerschnitt begrenzenden Wandungsbereich und einer Einrichtung zum Einsprühen von Öl in einen in dem Wandungsbereich geführten Luft-Öl-Volumenstrom ausgebildet, der zum Abscheiden von Öl durch einen Ölabscheider führbar ist.

Der Wandungsbereich ist als Leitung ausgeführt und die Einrichtung weist einen Auslassbereich auf, wobei das Öl auf konstruktiv einfache Art und Weise im Bereich der Einrichtung über den bewegbar gegenüber der Leitung ausgeführten Auslassbereich in den Luft-Öl-Volumenstrom einsprühbar ist, womit auch bestehende Strahltriebwerkssysteme mit geringem Aufwand mit einer Einrichtung zum Einsprühen von Öl ausführbar sind.

Bei einer konstruktiv besonders einfachen Ausführungsform des erfindungsgemäßen Strahltriebwerkes weist die Einrichtung einen Zuführbereich mit einer Bohrung auf, wobei der Auslassbereich über eine den Wandungsbereich im Wesentlichen in radialer Richtung durchgreifende Bohrung eines Zuführbereiches mit Öl beaufschlagbar ist.

Weist der Zuführbereich wenigstens ein ausgehend von der Leitung in radialer Richtung in den Strömungsquerschnitt des Luft-Öl-Volumenstromes vorkragendes Element auf, das einen Ölführkanal aufweist und in dem ein mit der Bohrung in Verbindung stehender Ölführkanal verläuft, ist das Öl in einem zur Wandung beabstandeten Bereich des Strömungsquerschnittes in den Luft-Öl-Volumenstrom mit einem gewünschten Verteilungsgrad einsprühbar.

Umfasst der Zuführbereich wenigstens ein mit dem vorkragenden Element drehbar verbundenes weiteres Element, in dem ein mit dem Ölführkanal verbundener weiterer Ölführkanal vorgesehen ist, ist ein Verteilungsgrad des Öls im Luft-Öl-Volumenstrom über die Drehbewegung des weiteren Elementes mit geringem konstruktivem Aufwand weiter verbesserbar.

Die Drehbewegung des weiteren Elementes gegenüber dem vorkragenden Element ist mit geringem Kraftaufwand auslösbar, wenn zwischen dem vorkragenden Element und dem weiteren Element ein Drehlager, vorzugsweise ein Gleitlager, vorgesehen ist.

Erstreckt sich das weitere Element im Strömungsquerschnitt des Luft-Öl-Volumenstromes in radialer Richtung und ist es im Bereich seiner in Bezug auf die Strömungsrichtung des Luft-Öl-Volumenstromes abgewandten Seite mit wenigstens einer Bohrung des Auslassbereiches ausgeführt, die in den Strömungsquerschnitt des Luft-Öl-Volumenstromes mündet, ist das Öl wenigstens annähernd in Strömungsrichtung des Luft-Öl-Volumenstromes in diesen einsprühbar, womit ein Einsprühwinkel des Öls in den Luft-Öl-Volumenstrom direkt im Mündungsbereich des Zuführbereiches im Wesentlichen unbeeinflusst von der Strömung des Luft-Öl-Volumenstromes einstellbar ist.

Wenn eine in Bezug auf die Strömungsrichtung des Luft-Öl-Volumenstromes dem Luft-Öl-Volumenstrom zugewandte Oberfläche des weiteren Elementes zumindest bereichsweise mit einer Schräge ausgebildet ist, über die die innere Energie des Luft-Öl-Volumenstromes in eine eine Drehbewegung des weiteren Elementes auslösende mechanische Antriebsenergie umwandelbar ist, ist der Drehantrieb des weiteren Elementes ohne zusätzliche motorische Einrichtungen realisiert.

Das Öl ist bei einer weiteren vorteilhaften Ausführungsform des erfindungsgemäßen Strahltriebwerkes mit gutem Verteilungsgrad in den Luft-Öl-Volumenstrom einleitbar, wenn das weitere Element mehrere Teilarmebereiche umfasst und im Wesentlichen in der Mitte des Strömungsquerschnittes des Luft-Öl-Volumenstromes drehbar mit dem vorkragenden Element verbunden ist und ausgehend von der Drehverbindung mit dem vorkragenden Element jeweils einen sich radial in Richtung der den Strömungsquerschnitt begrenzenden Wandung erstreckenden Teilarmbereich umfasst.

Sind die Teilarmbereiche jeweils mit einer Schräge ausgeführt, die gegengleich zueinander ausgebildet sind, wird das weitere Element durch eine Anströmung des Luft-Öl-Volumenstromes in gewünschtem Umfang ohne eine motorische Einrichtung in Drehung versetzt.

Ein Verteilungsgrad des in den Luft-Öl-Volumenstrom einzuleitenden Öles ist mit geringem Aufwand an den jeweils vorliegenden Anwendungsfall optimal einstellbar, wenn dem aus dem Auslassbereich in den Luft-Öl-Volumenstrom einsprühbarem Öl im Auslassbereich eine Strömungsrichtung aufprägbar ist, die mit der Hauptströmungsrichtung des Luft-Öl-Volumenstromes im Bereich der Einrichtung einen spitzen Winkel, d. h. einen Winkel von 0° bis 90°, einschließt.

Zur Einstellung eines gewünschten Verteilungsgrades des Öls im Luft-Öl-Volumenstrom kann im Mündungsbereich der Bohrung des Auslassbereiches eine Düseneinrichtung vorgesehen sein, in deren Bereich das zuzuführende Öl vorzugsweise vernebelbar ist.

Umfasst der Auslassbereich mehrere in radialer Richtung des Strömungsquerschnittes des Luft-Öl-Volumenstromes zueinander beabstandete Bohrungen, die jeweils in den Strömungsquerschnitt münden, ist das Öl bevorzugterweise über den gesamten radialen Bereich des Strömungsquerschnittes in den Luft-Öl-Volumenstrom im Bereich mehrerer Mündungsbereiche einsprühbar und mit hohem Verteilungsgrad in den Luft-Öl-Volumenstrom einbringbar.

Bei einer konstruktiv einfachen und bauraumgünstigen Ausführungsform des Strahltriebwerkes weist das weitere Element einen zusätzlichen Ölführungskanal auf, wobei die Bohrungen des weiteren Elementes über den zusätzlichen Ölführkanal miteinander verbunden sind.

Die Abscheideleistung im Bereich eines Ölabscheiders ist bei einer Weiterbildung des erfindungsgemäßen Strahltriebwerkes dadurch verbesserbar, dass die Einrichtung des Strahltriebwerks in Strömungsrichtung des Luft-Öl-Volumenstromes mehrere zueinander beabstandete Bereiche zum Einsprühen von Öl aufweist, da Tropfendurchmesser von im Luft-Öl-Volumenstrom mitgeführtem Öl im Bereich mehrerer in Strömungsrichtung des Luft-Öl-Volumenstromes nacheinander folgenden Eingabestellen des Öls in gewünschtem Umfang einstellbar bzw. vergrößerbar sind.

Sowohl die in den Patentansprüchen angegebenen Merkmale als auch die in den nachfolgenden Ausführungsbeispielen des erfindungsgemäßen Strahltriebwerkes angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Ausführungsformen des erfindungsgemäßen Strahltriebwerkes ergeben sich aus den Patentansprüchen und den nachfolgend unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Es zeigt:
- Fig. 1a: eine stark schematisierte Längsschnittansicht eines Strahltriebwerkes mit einer im Bläsergehäuse angeordneten Nebenaggregategetriebeeinrichtung;
- Fig. 1b: eine Fig. 1 a entsprechende Darstellung eines Strahltriebwerkes mit im Bereich des Triebwerkskerns montierter Nebenaggregategetriebeeinrichtung;
- Fig. 2: eine stark schematisierte Teildarstellung des Strahltriebwerkes gemäß Fig. 1 a bzw. Fig. 1b mit im Bereich der Nebenaggregategetriebeeinrichtung angeordnetem Ölabscheider und zugeordneter Vorkammer, die in einem Gehäuse der Nebenaggregategetriebeeinrichtung vorgesehen ist;
- Fig. 3: eine Fig. 2 entsprechende Darstellung einer von Fig. 2 abweichenden Ausführungsform des Strahltriebwerkes gemäß Fig. 1 a bzw. Fig. 1b mit außerhalb eines Gehäuses der Nebenaggregategetriebeeinrichtung angeordneter Vorkammer;
- Fig. 4: eine stark schematisierte Teildarstellung des Strahltriebwerkes gemäß Fig. 1 a bzw. Fig. 1b mit stromauf des Ölabscheiders angeordneter Einrichtung zum Einsprühen von Öl in einen LuftÖl-Volumenstrom,
- Fig. 5: eine vergrößerte Darstellung eines in Fig. 4 näher gekennzeichneten Bereiches V;
- Fig. 6: eine detailliertere Querschnittansicht einer Ausführungsform der Einrichtung zum Einsprühen von Öl in einen Luft-Öl-Volumenstrom;
- Fig. 7: die Einrichtung zum Einsprühen von Öl gemäß Fig. 6 aus einer in Fig. 6 näher gekennzeichneten Ansicht VII;
- Fig. 8: eine Schnittansicht der Einrichtung zum Einsprühen von Öl gemäß Fig. 6 entlang einer in Fig. 7 näher gekennzeichneten Schnittebene VIII-VIII; und
- Fig. 9: eine Fig. 8 entsprechende Darstellung der Einrichtung zum Einsprühen von Öl gemäß Fig. 6 entlang einer in Fig. 7 näher gekennzeichneten Schnittebene IX-IX.

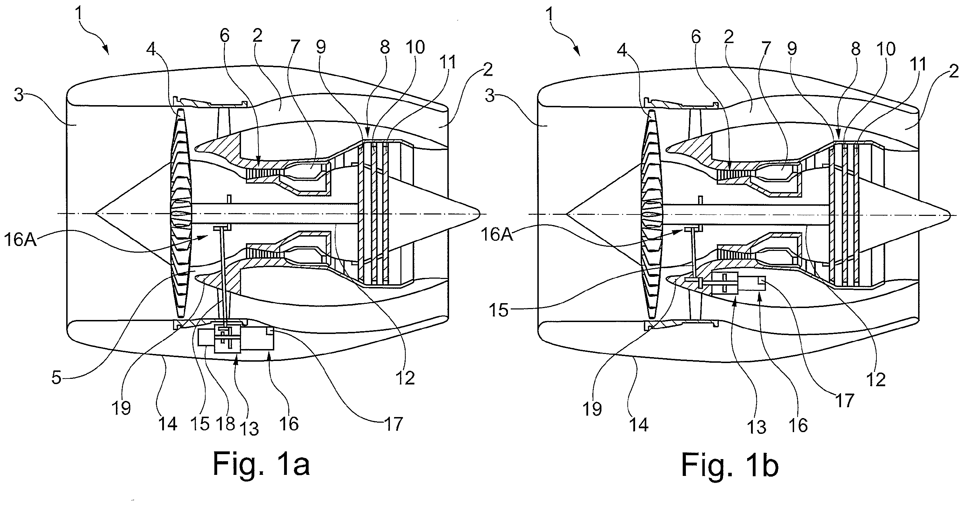

In Fig. 1 a und 1 b ist jeweils ein Strahltriebwerk 1 in einer Längsschnittansicht gezeigt. Das Strahltriebwerk 1 ist mit einem Nebenstromkanal 2 und einem Einlaufbereich 3 ausgebildet, wobei sich an den Einlaufbereich 3 stromab ein Bläser 4 in an sich bekannter Art und Weise anschließt. Wiederum stromab des Bläsers 4 teilt sich der Fluidstrom im Strahltriebwerk 1 in einen Nebenstrom und einen Kernstrom auf, wobei der Nebenstrom durch den Nebenstromkanal 2 und der Kernstrom in einen Triebwerkskern 5 strömt, der wiederum in an sich bekannter Art und Weise mit einer Verdichtereinrichtung 6, einem Brenner 7 und einer Turbineneinrichtung 8 ausgeführt ist.

Die Turbineneinrichtung 8 weist vorliegend drei Rotorvorrichtungen 9, 10 und 11 auf, welche in im Wesentlichen vergleichbarer Bauweise ausgebildet sind und mit einer Triebwerksachse 12 verbunden sind.

Bei der Ausführung des Strahltriebwerks 1 gemäß Fig. 1 a ist eine Nebenaggregategetriebeeinrichtung 13 in einem äußeren Triebwerksgehäuse 14 angeordnet, das den Nebenstromkanal 2 begrenzt und den äußeren Umfangsbereich des Strahltriebwerkes 1 darstellt. Die Nebenaggregategetriebeeinrichtung 13 ist vorliegend über eine in radialer Richtung des Stahltriebwerks 1 verlaufende Antriebswelle 15 über ein inneres Getriebe 16A mit der Triebwerksachse 12 verbunden und wird somit von der Triebwerksachse 12 im Betrieb des Stahltriebwerkes 1 angetrieben bzw. mit Drehmoment versorgt. Von der Nebenaggregategetriebeeinrichtung 13 werden verschiedene Nebenaggregate 16 und ein Ölabscheider 17, der auch als Breather bezeichnet wird, in gewünschtem Umfang mit Drehmoment beaufschlagt. Zusätzlich ist im Bereich der Nebenaggregategetriebeeinrichtung 13 auch ein Öltank 18 vorgesehen, der ein Hydraulikfluidreservoir darstellt, aus dem Öl zur Kühlung und Schmierung verschiedener Bereiche des Strahltriebwerks 1, wie Lagereinrichtungen, Zahnradpaarungen des inneren Getriebes 16A und der Nebenaggregategetriebeeinrichtung 13 sowie weiterer zu kühlender und zu schmierender Baugruppen des Strahltriebwerkes 1, entnommen wird.

Im Unterschied hierzu ist die Nebenaggregategetriebeeinrichtung 13 mit den Nebenaggregaten 16 und dem Ölabscheider 17 bei der Ausführung des Strahltriebwerks 1 gemäß Fig. 1b in radialer Richtung zwischen dem Nebenstromkanal 2 und dem Triebwerkskern 5 in einem sowohl den Nebenstromkanal 2 als auch den Triebwerkskern 5 begrenzenden Bauteil 19 angeordnet.

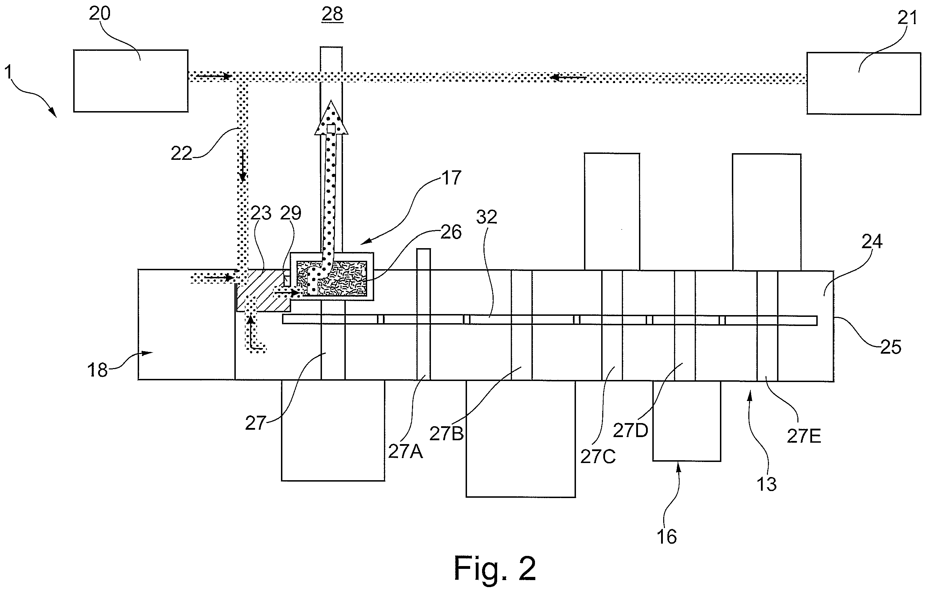

Fig. 2 bis Fig. 4 zeigen drei verschiedene Ausführungsformen des Strahltriebwerks 1 gemäß Fig. 1 a in stark schematisierter Form im Bereich der Nebenaggregategetriebeeinrichtung 13, der Nebenaggregate 16 und des Ölabscheiders 17, der vorliegend mit dem Öltank 18 und zwei weiteren Bereichen 20, 21 in Wirkverbindung steht, die vorliegend als Lagerkammern des Strahltriebwerks 1 ausgeführt sind und im Betrieb des Strahltriebwerks 1 mit Öl aus dem Öltank 18 zum Schmieren und Kühlen beaufschlagt werden. Dabei stellt der Bereich 20 die Lagerkammer des vorderen Lagers und der Bereich 21 die Lagerkammer des hinteren Lagers des Strahltriebwerkes 1 dar. Die zu Fig. 2 bis Fig. 4 näher beschriebenen Aspekte weist das Strahltriebwerk 1 gemäß Fig. 1b in im Wesentlichen identischem Umfang auf.

Bei der in Fig. 2 gezeigten Ausführungsform des Strahltriebwerks 1 sind jeweils ein Luft-Öl-Volumenstrom aus der vorderen Lagerkammer 20 und der hinteren Lagerkammer 21 in Richtung eines Leitungsbereiches 22 führbar, der vorliegend in eine dem Ölabscheider 17 vorgeschaltete Vorkammer 23 mündet. Des Weiteren ist auch der Öltank 18 vorliegend mit der Vorkammer 23 verbunden, um einen Luft-Öl-Volumenstrom aus dem Öltank 18 sowie die Luft-Öl-Volumenströme der Lagerkammern 20 und 21 über den Leitungsbereich 22 tangential in die Vorkammer einleiten zu können. Darüber hinaus ist auch ein Innenraum 24 eines Gehäuses 25 der Nebenaggregategetriebeeinrichtung 13 mit der Vorkammer 23 gekoppelt, wobei bei einer entsprechenden Bedruckung des Innenraums 24 ebenfalls ein Luft-Öl-Volumenstrom aus dem Gehäuse 25 der Nebenaggregategetriebeeinrichtung 13 tangential in die Vorkammer 23 eingeleitet wird. Die Vorkammer 23 ist mit dem Ölabscheider 17 verbunden, in dessen Innenraum ein poröser Bereich 26 drehbar angeordnet ist, der von dem aus der Vorkammer 23 ausströmenden Luft-Öl-Volumenstrom durchströmbar ist.

Dabei besteht die Möglichkeit, dass die Vorkammer 23 als ein mit erweitertem Innendurchmesser ausgeführtes Rohr bzw. Rohrstück ausgeführt ist, welches ohnehin die den Luft-Öl-Volumenstrom führende Leitung darstellt.

Der poröse Bereich 26 ist vorliegend über ein Zahnrad 27 von der Nebenaggregategetriebeeinrichtung 13 antreibbar und wirkt als Zentrifuge, um den Anteil an Öl des durch den porösen Bereich 26 strömenden Luft-Öl-Volumenstromes soweit als möglich reduzieren zu können. Dabei wird der Ölanteil des Luft-Öl-Volumenstromes im Ölabscheider 17 im Bereich des porösen Bereiches 26 einerseits wie beim Durchströmen eines Prallfilters und andererseits wie im Bereich einer Zentrifuge durch die Rotation des porösen Bereiches 26 durch Abscheiden des Öls aus der Luft reduziert. Das im Bereich des porösen Bereiches 26 aus dem Luft-Öl-Volumenstrom ausgefilterte Öl wird im äußeren Bereich des Ölabscheiders 17 in nicht näher dargestellter Art und Weise über eine Pumpeneinrichtung abgesaugt und zurück in den Öltank 18 geführt. Der aus dem Ölabscheider 17 in Richtung der Umgebung 28 ausströmende Luftstrom weist nur eine geringe Beladung an Öl auf. Das Zahnrad 27 ist neben weiteren Zahnrädern 27A bis 27E drehfest mit einer Getriebewelle 32 verbunden und im Innenraum 24 der Nebenaggregategetriebeeinrichtung 13 angeordnet.

Um die Beladung des in Richtung der Umgebung 28 abströmenden Luftvolumenstromes mit Öl möglichst gering einstellen zu können, ist vorliegend im Bereich des Übergangs zwischen der Vorkammer 23 und dem Ölabscheider 17 eine Einrichtung 29 vorgesehen, mittels der Öl in den von der Vorkammer 23 in Richtung des Ölabscheiders 17 strömenden Luft-Öl-Volumenstrom mit definierter Tröpfchengröße eingesprüht wird. Hierfür ist die Einrichtung 29 derart konfiguriert, dass beim Einsprühen von Öl in den in Richtung des Ölabscheiders 17 strömenden Luft-Öl-Volumenstrom Öltropfen entstehen, die größtenteils größer sind als Öltropfen, die aufgrund ihrer geringen Größe im porösen Bereich 26 nicht ausfilterbar sind.

Wiederum stromauf der Einrichtung 29 ist im Bereich der Vorkammer 23 ein Umlenkbereich für die über den Leitungsbereich 22, aus dem Innenraum 24 und aus dem Öltank 18 in die Vorkammer 23 geleiteten Luft-Öl-Volumenströme vorgesehen, in dessen Bereich zumindest ein Teil des Öls aus den Luft-Öl-Volumenströmen der Lagerkammern 20 und 21, des Innenraumes 24 und des Öltanks 18 aufgrund der im Umlenkbereich wirkenden Zentrifugalkraft abgeschieden wird. Damit wird bereits im Umlenkbereich der Vorkammer 23 die Beladung des Luft-Öl-Volumenstromes durch Ausfiltern größerer Tröpfchen reduziert, die eine größere Trägheit als Ölpartikel mit kleineren Durchmessern aufweisen.

Anschließend werden die noch im Luft-Öl-Volumenstrom, der in Richtung des Ölabscheiders 17 aus der Vorkammer 23 ausströmt, vorhandenen kleineren Tröpfchen durch das Einsprühen von Öl über die Einrichtung 29 vergrößert, was durch die jeweils vorliegenden Anziehungskräfte zwischen den einzelnen Öltröpfchen begünstigt wird. Durchströmt der mit Öl angereicherte Luft-Öl-Volumenstrom den Ölabscheider 17 und dessen porösen Bereich 26, der im Betrieb des Strahltriebwerks 1 entsprechend rotiert, wird ein weiterer wesentlicher Anteil des im Luft-Öl-Volumenstrom vorhandenen Öls abgeschleudert und anschließend aus dem Ölabscheider 17 in Richtung des Öltanks 18 abgesaugt. Die durch die Auswaschung des Öls nunmehr vergrößerten Ölpartikel können durch das Einspritzen von Öl von dem Metallschaum 26 im Breather 17 wesentlich effizienter separiert werden, womit Ölverluste des Strahltriebwerks 1 durch verringerte Emissionen in Richtung der Umgebung 28 minimiert sind.

Alternativ zu der vorstehenden Beschreibung besteht auch die Möglichkeit, dass über die Einrichtung 29 stromauf des als Zentrifuge wirkenden Umlenkbereiches der Vorkammer 23, im Bereich der Lagerkammern und/oder im Bereich von Abluftansaugpunkten Öl in einen oder mehrere Luft-Öl-Volumenströme im Strahltriebwerk 1 eingeleitet wird und die sich im Luft-Öl-Volumenstrom stromab der Einrichtung 29 aufgrund der Vereinigung der Öltröpfchen bildenden größeren Tropfen im Umlenkbereich der Vorkammer 23 aufgrund der wirkenden Zentrifugalkraft abgeschieden werden. Anschließend erfolgt der weitere vorbeschriebene Abscheideprozess im rotierenden porösen Bereich 26 des Ölabscheiders 17, bevor die aus dem Ölabscheider 17 ausströmende Luft mit nur geringer Beladung an Öl in Richtung der Umgebung 28 ausströmt.

Bei der Ausführung gemäß Fig. 2 ist die Vorkammer 23 vollständig in das Gehäuse 25 der Nebenaggregategetriebeeinrichtung 13 integriert, während der Ölabscheider 17 zumindest bereichsweise in den Innenraum 24 der Nebenaggregategetriebeeinrichtung 13 eingreift.

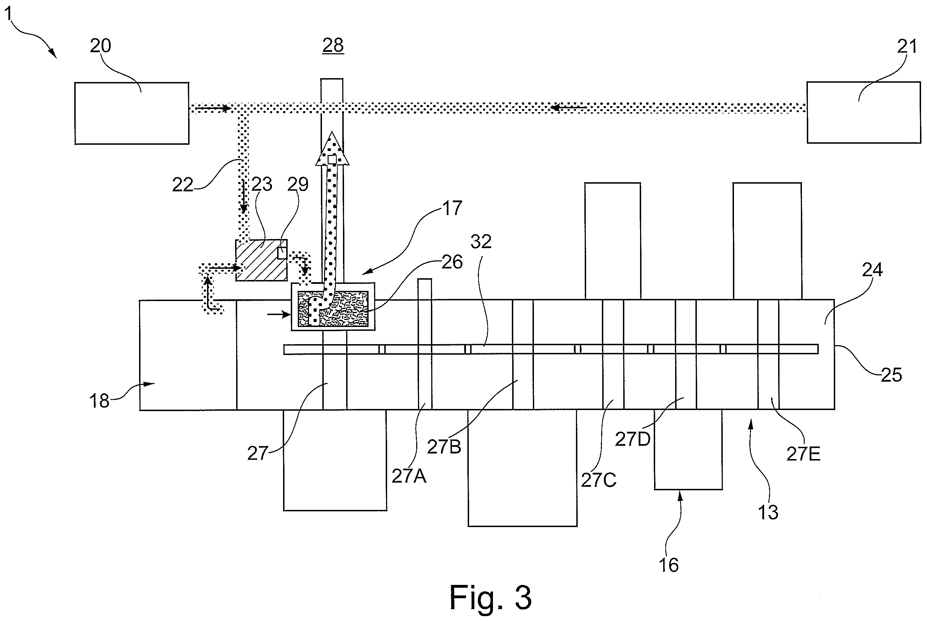

Im Unterschied hierzu ist die Vorkammer 23 bei der Ausführung des Strahltriebwerks 1 gemäß Fig. 3 vollständig außerhalb des Gehäuses der Nebenaggregategetriebeeinrichtung 13 angeordnet, während der Ölabscheider 17 im gleichen Umfang wie bei der Ausführung des Strahltriebwerks 1 gemäß Fig. 2 bereichsweise im Gehäuse 25 angeordnet ist. Wie bei der Ausführung des Strahltriebwerks 1 gemäß Fig. 2 werden auch bei dem Strahltriebwerk 1 gemäß Fig. 3 die Luft-Öl-Volumenströme aus den Lagerkammern 20 und 21, dem Öltank 18 und dem Innenraum 24 der Nebenaggregategetriebeeinrichtung 13 zunächst tangential in die Vorkammer 23 eingeleitet und über den Umlenkbereich in Richtung der Einrichtung 29 weitergeführt, in deren Bereich wiederum Öl in den gesammelten Luft-Öl-Volumenstrom eingesprüht wird. Anschließend wird der mit Öl angereicherte Luft-Öl-Volumenstrom in den Ölabscheider 17 eingeleitet und durchströmt dort den porösen Bereich 26.

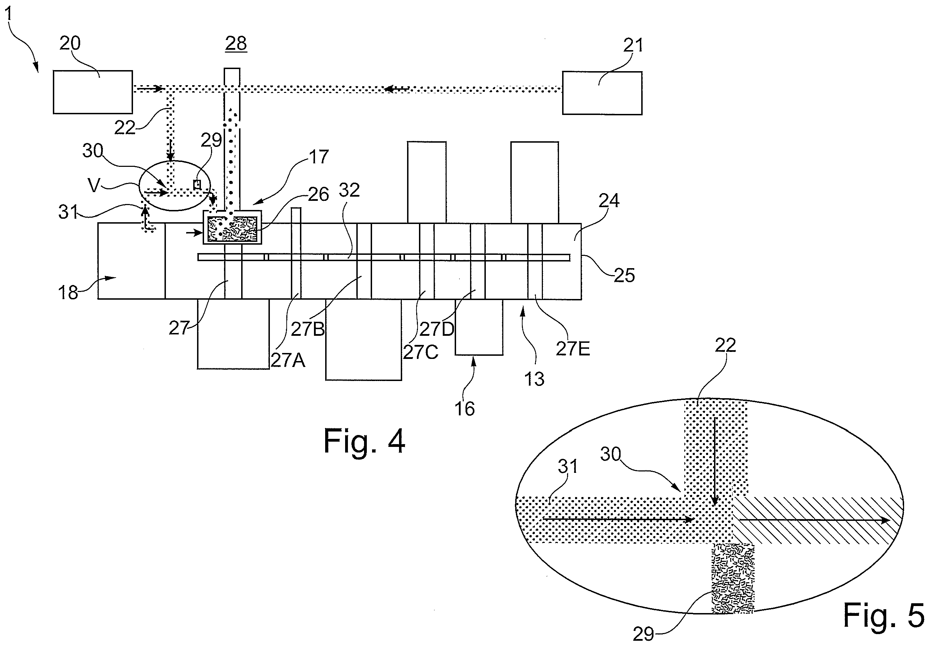

Die Ausführung des Strahltriebwerks 1 gemäß Fig. 4 ist im Unterschied hierzu ohne die Vorkammer 23 ausgeführt und kann unter anderem Anwendung finden für ein Strahltriebwerk, dessen Öltank nicht in die Nebenaggregategetriebeeinrichtung 13 integriert ist und vorzugsweise in einem zu der Nebenaggregategetriebeeinrichtung 13 beabstandeten Bauraum innerhalb des Strahltriebwerks angeordnet ist. Die im Bereich der Lagerkammern 20 und 21 sowie im Bereich des Öltanks 18 mit Öl angereicherten Luft-Öl-Volumenströme werden stromab eines Leitungsbereichsknotens 30, in dessen Bereich der Leitungsbereich 22 und ein weiterer mit dem Öltank 18 verbundener Leitungsbereich 31 münden, in den Umlenkbereich eingeleitet, in dessen Bereich ein Teil des Öls aus dem vereinten Luft-Öl-Volumenstrom abgeschieden wird. Wiederum stromab der Umlenkeinrichtung wird wie in Fig. 5 stark schematisiert dargestellt, über die Einrichtung 29 Öl in den vom Leitungsbereichsknoten 30 abströmenden Luft-Öl-Volumenstrom eingesprüht. Der gewaschene Luft-Öl-Volumenstrom strömt mit größeren Öltropfen in den Ölabscheider 17 ein, in dem das Öl in der vorbeschriebenen Art und Weise im Bereich des rotierenden porösen Bereiches 26 abgeschieden wird. Zusätzlich wird der Luft-Öl-Volumenstrom aus dem Innenraum 24 der Nebenaggregategetriebeeinrichtung 13 direkt in den Ölabscheider 17 tangential eingeleitet, um auch die aus dem bedruckten Gehäuse 25 ausströmende und mit Öl beladene Verbrauchsluft im Bereich des Ölabscheiders 17 in gewünschtem Umfang zu reinigen.

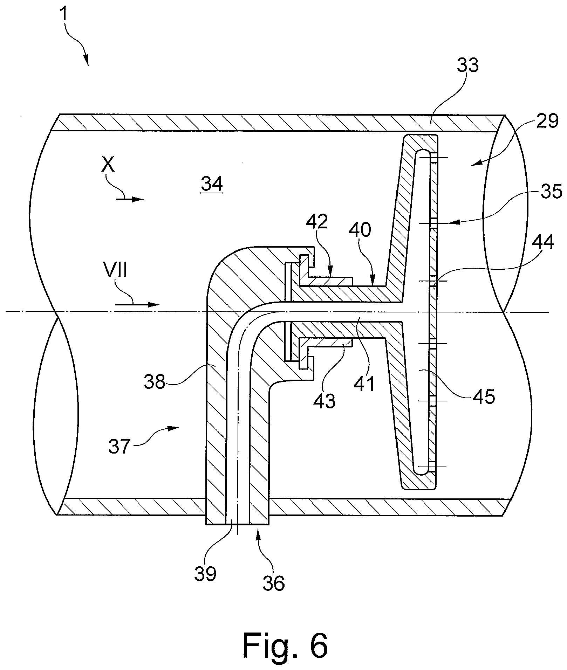

Fig. 6 zeigt eine Querschnittansicht einer Ausführungsform der Einrichtung 29 zum Einsprühen von Öl in den in einem von einem Wandungsbereich 33 begrenzten Strömungsquerschnitt 34 geführten Luft-Öl-Volumenstrom der Lagerkammern 20 und 21, des Öltanks 18 und vorzugsweise auch eines Luft-Öl-Volumenstromes aus dem Innenraum 24 der Nebenaggregategetriebeeinrichtung 13. Die Einrichtung 29 ist mit einem bewegbar gegenüber dem Wandungsbereich 33 ausgeführten Auslassbereich ausgebildet, über den Öl in den Luft-Öl-Volumenstrom einsprühbar ist. Der Auslassbereich 35 ist über eine den Wandungsbereich 33 im Wesentlichen in radialer Richtung durchgreifende Bohrung 36 eines Zuführbereiches 37 mit Öl beaufschlagbar. Der Zuführbereich 37 weist ein ausgehend vom Wandungsbereich 33 in radialer Richtung in den Strömungsquerschnitt 34 des Luft-Öl-Volumenstromes vorkragendes Element 38 auf, in dem ein mit der Bohrung 36 in Verbindung stehender Ölführkanal 39 verläuft. Darüber hinaus umfasst der Zuführbereich 37 wenigstens ein mit dem vorkragenden Element 38 drehbar verbundenes weiteres Element 40, in dem ein mit dem Ölführkanal 39 verbundener weiterer Ölführkanal 41 vorgesehen ist.

Zwischen dem vorkragenden Element 38 und dem weiteren Element 40 ist ein Drehlager 42 vorgesehen, das vorliegend als Gleitlager ausgebildet ist. Das Drehlager 42 umfasst eine zwischen dem vorkragenden Element 38 und dem weiteren Element 40 angeordnete Gleitbuchse 43, die sowohl in radialer Richtung als auch in axialer Richtung Lagerkräfte aufnimmt und eine Drehbewegung des weiteren Elementes 40 gegenüber dem fest mit der Wandung 33 verbundenen vorkragenden Element 38 bei geringen Gleitreibungskräften ermöglicht. Das weitere Element 40 erstreckt sich im Strömungsquerschnitt 34 des Luft-Öl-Volumenstromes in radialer Richtung und ist im Bereich seiner in Bezug auf die Strömungsrichtung X des Luft-Öl-Volumenstromes abgewandten Seite mit mehreren Bohrungen 44 des Auslassbereiches 35 ausgeführt, die in den Strömungsquerschnitt 34 des Luft-Öl-Volumenstromes münden.

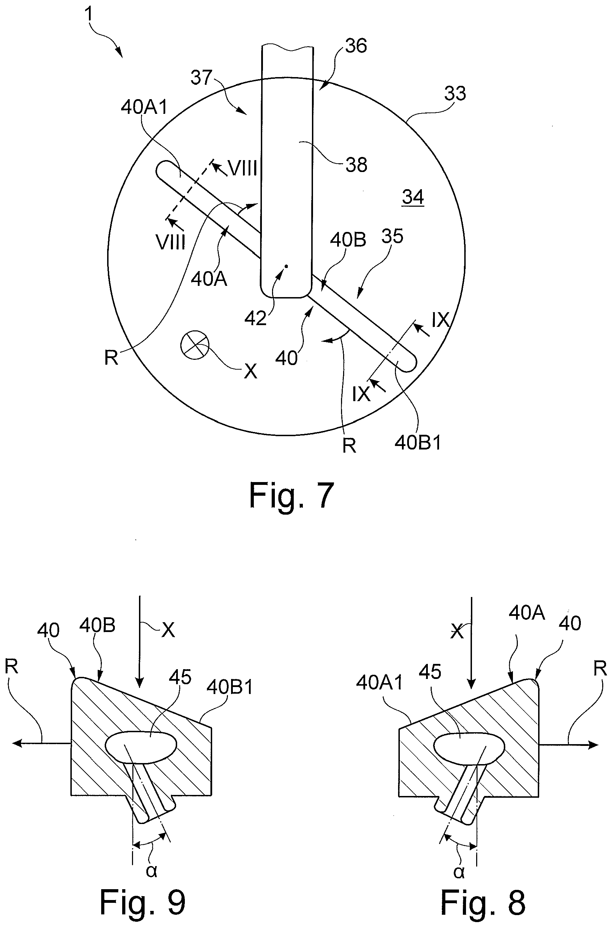

Fig. 7 zeigt die Einrichtung 29 aus einer in Fig. 6 näher gekennzeichneten Ansicht VII. Aus der Darstellung gemäß Fig. 7 geht hervor, dass das weitere Element 40 im Wesentlichen in der Mitte des Strömungsquerschnittes 34 des Luft-Öl-Volumenstromes drehbar mit dem vorkragenden Element 38 verbunden ist und ausgehend von der Drehverbindung mit dem vorkragenden Element 38 jeweils einen sich radial in Richtung der den Strömungsquerschnitt begrenzenden Wandungsbereich 33 erstreckenden Teilarmbereich 40A, 40B umfasst. Die Teilarmbereiche 40A und 40B sind, wie in Fig. 8 und Fig. 9 gezeigt, jeweils mit einer Schräge 40A1 bzw. 40B1 ausgeführt, die gegengleich zueinander ausgebildet sind. Dadurch, dass die in Bezug auf die Strömungsrichtung X des Luft-Öl-Volumenstromes dem Luft-Öl-Volumenstrom jeweils zugewandte Oberfläche des weiteren Elementes 40 mit den Schrägen 40A1 und 40B1 ausgebildet ist, wird die innere Energie des Luft-Öl-Volumenstromes in eine eine Drehbewegung des weiteren Elementes 40 auslösende mechanische Antriebsenergie umgewandelt, wobei die aus den Schrägen 40A1 und 40B1 und der Strömungsgeschwindigkeit des Luft-Öl-Volumenstromes resultierende Drehrichtung in der Zeichnung unter dem Bezugszeichen R näher angegeben ist.

Die Bohrungen 44 des weiteren Elementes 40 sind vorliegend in Bezug auf die Strömungsrichtung X des Luft-Öl-Volumenstromes im Strömungsquerschnitt 34 unter einem spitzen Winkel α schräg verlaufend im weiteren Element 40 angeordnet. Damit ist dem aus dem Auslassbereich 35 in den Luft-Öl-Volumenstrom einsprühbaren Öl im Auslassbereich 35 eine Strömungsrichtung aufprägbar, die mit der Hauptströmungsrichtung X des Luft-Öl-Volumenstromes im Bereich der Einrichtung 29 einen spitzen Winkel einschließt, um einen gewünscht hohen Verteilungsgrad des Öls im Luft-Öl-Volumenstrom zu erreichen und zusätzlich dem weiteren Element 40 durch den Austritt des Öls ebenfalls einen Drehimpuls aufzuprägen.

Die am weiteren Element 40 angreifenden Axialkräfte, die aus der Anströmung des Luft-Öl-Volumenstromes und aus der Ausströmung des Öls aus dem Auslassbereich 35 bzw. aus den Bohrungen 44 resultieren, sind vorzugsweise derart aufeinander abgestimmt, dass im Bereich des Drehlagers 42 wirkende Lagerkräfte minimal sind.

Die Bohrungen 44 des weiteren Elementes 40 sind vorliegend über den im Wesentlichen in Strömungsrichtung X des Luft-Öl-Volumenstromes verlaufenden weiteren Ölführkanal 41 und einen sich in radialer Richtung des Strömungsquerschnittes 34 ebenfalls im weiteren Element 40 verlaufenden zusätzlichen Ölkanal 45 mit dem Ölführkanal 39 und auch untereinander über den zusätzlichen Ölkanal 45 verbunden.

In Abhängigkeit des jeweils vorliegenden Anwendungsfalles ist die Einrichtung 29 des Strahltriebwerks 1 mit lediglich einer oder mit mehreren in Strömungsrichtung X des Luft-Öl-Volumenstromes zueinander beabstandeten Bereichen gemäß Fig. 6 bis Fig. 9 zum Einsprühen von Öl in einen oder mehrere Luft-Öl-Volumenströme im Strahltriebwerk 1 ausgeführt, um im Bereich des Ölabscheiders 17 eine gewünscht hohe Abscheideleistung zu erreichen.

### Bezugszeichenliste

- 1: Strahltriebwerk
- 2: Nebenstromkanal
- 3: Einlaufbereich
- 4: Bläser
- 5: Triebwerkskern
- 6: Verdichtereinrichtung
- 7: Brenner
- 8: Turbineneinrichtung
- 9, 10, 11: Rotorvorrichtung
- 12: Triebwerksachse
- 13: Nebenaggregategetriebeeinrichtung
- 14: Triebwerksgehäuse
- 15: Antriebswelle
- 16: Nebenaggregate
- 16A: inneres Getriebe
- 17: Ölabscheider
- 18: Öltank
- 19: Bauteil
- 20: Bereich, vordere Lagerkammer
- 21: Bereich, hintere Lagerkammer
- 22: Leitungsbereich
- 23: Vorkammer
- 24: Innenraum
- 25: Gehäuse
- 26: poröser Bereich
- 27: Zahnrad
- 27A bis 27E: Zahnrad
- 28: Umgebung
- 29: Einrichtung
- 30: Leitungsbereichsknoten
- 31: weiterer Leitungsbereich
- 32: Getriebewelle
- 33: Wandungsbereich
- 34: Strömungsquerschnitt
- 35: Auslassbereich
- 36: Bohrung
- 37: Zuführbereich
- 38: Element
- 39: Ölführkanal
- 40: weiteres Element
- 40A, 40B: Teilarmbereich
- 40A1, 40B1: Schräge
- 41: weiterer Ölführkanal
- 42: Drehlager
- 43: Gleitbuchse
- 44: Bohrung
- 45: zusätzlicher Ölkanal
- R: Drehrichtung
- X: Hauptströmungsrichtung des Luft-Öl-Volumenstromes
- α: spitzer Winkel

## Patentansprüche

1. Strahltriebwerk (1) mit einem einen Strömungsquerschnitt (34) begrenzenden Wandungsbereich (33), welcher im Betrieb einen Luft-Öl-Volumenstrom führt, und einer Einrichtung (29) zum Einsprühen von Öl in einen in dem Wandungsbereich (33) geführten Luft-Öl-Volumenstrom, der zum Abscheiden von Öl durch einen Ölabscheider (17) führbar ist, **dadurch gekennzeichnet, dass** der Wandungsbereich (33) als Leitung ausgeführt ist und die Einrichtung (29) einen Auslassbereich (35) aufweist, wobei das Öl im Bereich der Einrichtung (29) über den bewegbar gegenüber der Leitung (33) ausgeführten Auslassbereich (35) in den Luft-Öl-Volumenstrom einsprühbar ist.

2. Strahltriebwerk nach Anspruch 1, **dadurch gekennzeichnet, dass** die Einrichtung (29) einen Zuführbereich (37) mit einer Bohrung (36) aufweist, wobei der Auslassbereich (35) über die die Leitung (33) im Wesentlichen in radialer Richtung durchgreifende Bohrung (36) des Zuführbereiches (37) mit Öl beaufschlagbar ist.

3. Strahltriebwerk nach Anspruch 2, **dadurch gekennzeichnet, dass** der Zuführbereich (37) wenigstens ein ausgehend von der Leitung (33) in radialer Richtung in den Strömungsquerschnitt (34) des Luft-Öl-Volumenstromes vorkragendes Element (38) aufweist, das einen Ölführkanal (39) aufweist und in dem der mit der Bohrung (36) in Verbindung stehender Ölführkanal (39) verläuft.

4. Strahltriebwerk nach Anspruch 3, **dadurch gekennzeichnet, dass** der Zuführbereich (37) wenigstens ein mit dem vorkragenden Element (38) drehbar verbundenes weiteres Element (40) umfasst, in dem ein mit dem Ölführkanal (39) verbundener weiterer Ölführkanal (41) vorgesehen ist.

5. Strahltriebwerk nach Anspruch 4, **dadurch gekennzeichnet, dass** zwischen dem vorkragenden Element (38) und dem weiteren Element (40) ein Drehlager (43), vorzugsweise ein Gleitlager, vorgesehen ist.

6. Strahltriebwerk nach Anspruch 4 oder 5, **dadurch gekennzeichnet, dass** das weitere Element (40) sich im Strömungsquerschnitt (34) des Luft-Öl-Volumenstromes in radialer Richtung erstreckt und im Bereich seiner in Bezug auf die Strömungsrichtung (X) des Luft-Öl-Volumenstromes abgewandten Seite mit wenigstens einer Bohrung (44) des Auslassbereiches (35) ausgeführt ist, die in den Strömungsquerschnitt (34) des Luft-Öl-Volumenstromes mündet.

7. Strahltriebwerk nach einem der Ansprüche 4 bis 6, **dadurch gekennzeichnet, dass** eine in Bezug auf die Strömungsrichtung (X) des Luft-Öl-Volumenstromes dem Luft-Öl-Volumenstrom zugewandte Oberfläche des weiteren Elementes (40) zumindest bereichsweise mit einer Schräge (40A1, 40B1) ausgebildet ist, über die die innere Energie des Luft-Öl-Volumenstromes in eine eine Drehbewegung des weiteren Elementes (40) auslösende mechanische Antriebsenergie umwandelbar ist.

8. Strahltriebwerk nach einem der Ansprüche 4 bis 7, **dadurch gekennzeichnet, dass** das weitere Element (40) mehrere Teilarmbereiche (40A, 40B) umfasst und im Wesentlichen in der Mitte des Strömungsquerschnittes (34) des Luft-Öl-Volumenstromes drehbar mit dem vorkragenden Element (38) verbunden ist und ausgehend von der Drehverbindung mit dem vorkragenden Element (38) jeweils einen sich radial in Richtung der den Strömungsquerschnitt begrenzenden Leitung (33) erstreckenden Teilarmbereich (40A, 40B) umfasst.

9. Strahltriebwerk nach Anspruch 8, **dadurch gekennzeichnet, dass** die Teilarmbereiche (40A, 40B) jeweils mit einer Schräge (40A1, 40B1) ausgeführt sind, die gegengleich zueinander ausgebildet sind.

10. Strahltriebwerk nach einem der Ansprüche 6 bis 9, **dadurch gekennzeichnet, dass** im Mündungsbereich der Bohrung des Auslassbereiches eine Düseneinrichtung vorgesehen ist, in deren Bereich das zuzuführende Öl vorzugsweise vernebelbar ist.

11. Strahltriebwerk nach einem der Ansprüche 6 bis 10, **dadurch gekennzeichnet, dass** der Auslassbereich (35) mehrere in radialer Richtung des Strömungsquerschnittes (34) des Luft-Öl-Volumenstromes zueinander beabstandete Bohrungen (44) umfasst, die jeweils in den Strömungsquerschnitt (34) münden.

12. Strahltriebwerk nach Anspruch 11, **dadurch gekennzeichnet, dass** das weitere Element (40) einen zusätzlichen Ölführkanal (45) aufweist, wobei die Bohrungen (44) des weiteren Elementes (40) über den zusätzlichen Ölführkanal (45) miteinander verbunden sind.

13. Strahltriebwerk nach einem der Ansprüche 1 bis 12, **dadurch gekennzeichnet, dass** dem aus dem Auslassbereich (35) in den Luft-Öl-Volumenstrom einsprühbaren Öl im Auslassbereich (35) eine Strömungsrichtung aufprägbar ist, die mit der Hauptströmungsrichtung (X) des Luft-Öl-Volumenstromes im Bereich der Einrichtung (29) einen spitzen Winkel (α) einschließt.

14. Strahltriebwerk nach einem der Ansprüche 1 bis 13, **dadurch gekennzeichnet, dass** die Einrichtung (29) in Strömungsrichtung des Luft-Öl-Volumenstromes mehrere zueinander beabstandete Bereiche zum Einsprühen von Öl aufweist.

## Claims

1. Jet engine (1) with a wall area (33) limiting a flow cross-section (34), said wall area guiding an air-oil volume flow during operation, and with a device (29) for spraying oil into an air-oil volume flow guided inside the wall area (33), said air-oil volume flow being guidable through an oil separator (17) in order to separate oil, **characterized in that** the wall area (33) is designed as a pipe and that the device (29) has an outlet area (35), where the oil can be sprayed into the air-oil volume flow in the area of the device (29) via the outlet area (35) designed movable relative to the pipe (33).

2. Jet engine in accordance with Claim 1, **characterized in that** the device (29) has a feed area (37) with a hole (36), where the outlet area (35) can be supplied with oil via the hole (36) of a feed area (37) passing through the pipe (33) substantially in the radial direction.

3. Jet engine in accordance with Claim 2, **characterized in that** the feed area (37) has at least one element (38) projecting in the radial direction from the pipe (33) into the flow cross-section (34) of the air-oil volume flow and containing an oil guide duct (39) and inside which extends the oil guide duct (39) connected to the hole (36).

4. Jet engine in accordance with Claim 3, **characterized in that** the feed area (37) includes at least one further element (40) rotatably connected to the projecting element (38) and inside which a further oil guide duct (41) connected to the oil guide duct (39) is provided.

5. Jet engine in accordance with Claim 4, **characterized in that** a pivot bearing (43), preferably a plain bearing, is provided between the projecting element (38) and the further element (40).

6. Jet engine in accordance with Claim 4 or 5, **characterized in that** the further element (40) extends in the radial direction in the flow cross-section (34) of the air-oil volume flow and is provided, in the area of its side facing away from the flow direction (X) of the air-oil volume flow, with at least one hole (44) of the outlet area (35), said hole leading into the flow cross-section (34) of the air-oil volume flow.

7. Jet engine in accordance with one of the Claims 4 to 6, **characterized in that** a surface of the further element (40) facing the air-oil volume flow relative to the flow direction (X) of the latter is designed at least in some areas with a slope (40A1, 40B1), using which the inner energy of the air-oil volume flow can be transformed into a mechanical drive energy triggering a rotary movement of the further element (40).

8. Jet engine in accordance with one of the Claims 4 to 7, **characterized in that** the further element (40) includes several partial arm areas (40A, 40B) and is rotatably connected to the projecting element (38) substantially in the center of the flow cross-section (34) of the air-oil volume flow and includes, starting at the rotary connection to the projecting element (38), partial arm areas (40A, 40B), each extending radially in the direction of the pipe (33) limiting the flow cross-section.

9. Jet engine in accordance with Claim 8, **characterized in that** the partial arm areas (40A, 40B) are each designed with a slope (40A1, 40B1), said slopes being designed mirror-inverted to one another.

10. Jet engine in accordance with one of the Claims 6 to 9, **characterized in that** a nozzle device is provided in the opening area of the hole of the outlet area, in the area of which device the oil to be supplied can preferably be turned into mist.

11. Jet engine in accordance with one of the Claims 6 to 10, **characterized in that** the outlet area (35) includes several holes (44), at a distance from one another in the radial direction of the flow cross-section (34) of the air-oil volume flow, each hole leading into the flow cross-section (34).

12. Jet engine in accordance with Claim 11, **characterized in that** the further element (40) has an additional oil guide duct (45), wherein the holes (44) of the further element (40) are connected to one another via the additional oil guide duct (45).

13. Jet engine in accordance with one of the Claims 1 to 12, **characterized in that** the oil sprayable out of the outlet area (35) into the air-oil volume flow can be imparted with a flow direction in the outlet area (35), said flow direction forming an acute angle (α) with the main flow direction (X) of the air-oil volume flow in the area of the device (29).

14. Jet engine in accordance with one of the Claims 1 to 13, **characterized in that** the device (29) has in the flow direction of the air-oil volume flow several areas for spraying in oil at a distance from one another.

## Revendications

1. Réacteur (1) avec une zone de paroi (33) délimitant une section d'écoulement (34), laquelle zone conduit en service un flux volumétrique d'air-huile, et avec un dispositif (29) pour pulvériser de l'huile dans un flux volumétrique d'air-huile guidé dans la zone de paroi (33), lequel flux peut être conduit à travers un déshuileur (17) afin de séparer de l'huile, **caractérisé en ce que** la zone de paroi (33) se présente sous la forme d'une conduite et que le dispositif (29) possède une zone d'échappement (35), sachant que l'huile peut être pulvérisée dans le flux volumétrique d'air-huile, au niveau du dispositif (29), moyennant la zone d'échappement (35) conçue pour être déplaçable par rapport à la conduite (33).

2. Réacteur selon la revendication n° 1, **caractérisé en ce que** le dispositif (29) présente une zone d'alimentation (37) avec un alésage (36), sachant que la zone d'échappement (35) peut être alimentée en huile par l'alésage (36) de la zone d'alimentation (37), perçant la conduite (33) essentiellement dans le sens radial.

3. Réacteur selon la revendication n° 2, **caractérisé en ce que** la zone d'alimentation (37) présente au moins un élément saillant (38), partant de la conduite (33) et pénétrant dans le sens radial dans la section d'écoulement (34) du flux volumétrique d'air-huile et contenant un canal de guidage d'huile (39) et dans lequel s'étend le canal de guidage d'huile (39) relié à l'alésage (36).

4. Réacteur selon la revendication n° 3, **caractérisé en ce que** la zone d'alimentation (37) comprend au moins un autre élément (40) relié à l'élément saillant (38) de manière à pouvoir tourner, un autre canal de guidage d'huile (41) relié au canal de guidage d'huile (39) étant prévu dans cet autre élément.

5. Réacteur selon la revendication n° 4, **caractérisé en ce qu'**est prévu un palier rotatif (43), de préférence un palier lisse, entre l'élément saillant (38) et l'autre élément (40).

6. Réacteur selon la revendication n° 4 ou n° 5, **caractérisé en ce que** l'autre élément (40) s'étend dans la section d'écoulement (34) du flux volumétrique d'air-huile dans le sens radial et est doté d'au moins un alésage (44) de la zone d'échappement (35) au niveau de son côté opposé au sens d'écoulement (X) du flux volumétrique d'air-huile, lequel alésage débouche dans la section d'écoulement (34) du flux volumétrique d'air-huile.

7. Réacteur selon une des revendications n° 4 à n° 6, **caractérisé en ce qu'**une surface de l'autre élément (40), faisant face au flux volumétrique d'air-huile par rapport au sens d'écoulement (X) du flux volumétrique d'air-huile, est dotée au moins partiellement d'un dévers (40A1, 40B1) au moyen duquel l'énergie interne du flux volumétrique d'air-huile peut être convertie en une énergie mécanique motrice provoquant un mouvement rotatif de l'autre élément (40).

8. Réacteur selon une des revendications n° 4 à n° 7, **caractérisé en ce que** l'autre élément (40) comprend plusieurs zones de bras partielles (40A, 40B) et est relié, essentiellement au centre de la section d'écoulement (34) du flux volumétrique d'air-huile, à l'élément saillant (38) de manière à pouvoir tourner et comprend, partant du raccord rotatif avec l'élément saillant (38), des zones de bras partielles (40A, 40B) s'étendant radialement dans le sens de la conduite (33) délimitant la section d'écoulement.

9. Réacteur selon la revendication n° 8, **caractérisé en ce que** les zones de bras partielles (40A, 40B) sont dotées chacune d'un dévers (40A1, 40B1), lesquels dévers étant inversés les uns par rapport aux autres.

10. Réacteur selon une des revendications n° 6 à n° 9, **caractérisé en ce qu'**est prévu, dans l'embouchure de l'alésage de la zone d'échappement, un dispositif à buse au niveau duquel l'huile à alimenter peut être de préférence atomisée.

11. Réacteur selon une des revendications n° 6 à n° 10, **caractérisé en ce que** la zone d'échappement (35) comprend plusieurs alésages (44) espacés les uns des autres dans le sens radial de la section d'écoulement (34) du flux volumétrique d'air-huile, lesquels alésages débouchent chacun dans la section d'écoulement (34).

12. Réacteur selon la revendication n° 11, **caractérisé en ce que** l'autre élément (40) présente un canal de guidage d'huile supplémentaire (45), sachant que les alésages (44) de l'autre élément (40) sont reliés entre eux moyennant le canal de guidage d'huile supplémentaire (45).

13. Réacteur selon une des revendications n° 1 à n° 12, **caractérisé en ce qu'**un sens d'écoulement peut être donné, dans la zone d'échappement (35), à l'huile pulvérisable dans le flux volumétrique d'air-huile à partir de la zone d'échappement (35), lequel sens d'écoulement forme, au niveau du dispositif (29), un angle aigu (α) par rapport au sens principal d'écoulement (X) du flux volumétrique d'air-huile.

14. Réacteur selon une des revendications n° 1 à n° 13, **caractérisé en ce que** le dispositif (29) présente dans le sens d'écoulement du flux volumétrique d'air-huile plusieurs zones espacées les unes des autres et servant à pulvériser de l'huile.
